Europäisches Patentamt

**European Patent Office**

Office européen des brevets

(19)

(11) Veröffentlichungsnummer: **0 150 394**
A1

## (12) EUROPÄISCHE PATENTANMELDUNG

(21) Anmeldenummer: 84115429.7

(22) Anmeldetag: 14.12.84

(51) Int. Cl.⁴: **A 01 K 9/00**

(30) Priorität: 14.01.84 DE 3401168

(43) Veröffentlichungstag der Anmeldung: 07.08.85
Patentblatt 85/32

(84) Benannte Vertragsstaaten: **AT BE CH DE FR GB IT LI NL**

(71) Anmelder: **Förster, Martin, Dipl.-Ing., Gerwigstrasse 27,
D-7707 Engen (DE)**

(72) Erfinder: **Förster, Martin, Dipl.-Ing., Gerwigstrasse 27,
D-7707 Engen (DE)**

(74) Vertreter: **Engelhardt, Guido, Dipl.-Ing.,
Montafonstrasse 35 Postfach 1350,
D-7990 Friedrichshafen 1 (DE)**

(54) Einrichtung zur Versorgung von Tieren mit einem flüssigen Futtermittel.

(57) Bei einer Einrichtung (1) zum Versorgen von Tieren mit
einem flüssigen Futtermittel, das einer Saugstelle (11) zuführbar ist, ist diese mittels einer elastisch verformbaren
Schlauchleitung (24) mit einem ortsfesten Tränkeautomaten
(4) verbunden und mit Hilfe eines Zugmittels (19) gegenüber
diesem horizontal verstellbar angeordnet.
    Aufgrund der verschiebbaren Anordnung der Saugstel-
le (11) ist es möglich, mit nur einem Tränkeautomaten (4)
eine große Anzahl von Tieren gezielt mit stets exakt zu
bemessenden Futtermittelmengen zu versorgen.

**DIPL.-ING. GUIDO ENGELHARDT PATENTANWALT**

**7990 Friedrichshafen**

Martin Förster

7707 Engen

Einrichtung zur Versorgung von Tieren mit einem flüssigen Futtermittel

Die Erfindung bezieht sich auf eine Einrichtung zum Versorgen von Kälbern, Rindern oder ähnlichen Haustieren, insbesondere Jungtieren, mit einem flüssigen Futtermittel, das einer Saugstelle zuführbar ist.

Mit einem Tränkeautomaten versehene Versorgungseinrichtungen dieser Art sind in unterschiedlichen Ausgestaltungen bekannt und haben sich in der Praxis auch bewährt. Um eine größere Anzahl von Tieren mit Milch versorgen zu können, ist es ferner bekannt, den diese aufnehmenden Vorratsbehälter in einem in Schienen verfahrbaren Gestell anzuordnen und dieses zusammen mit der starr angeschlossenen Saugstelle zu den Aufstallungen zu verfahren. Der dazu erforderliche Bauaufwand ist somit außerordentlich groß, auch sind hohe Antriebsleistungen notwendig, um die Verschiebebewegungen des schweren Gestells auszuführen.Nicht nur die Anschaffungen, sondern auch der Unterhalt einer derartigen störanfälligen Einrichtung, zumal die im Stallboden angeordneten Schienen

./.

- 2 -

ständig von dem in Stallungen unumgänglichen Schmutz zu säubern sind, verursachen demnach erhebliche Kosten. Des weiteren wird bei jeder Verstellbewegung des Vorratsbehälters die Milch in diesem durchgeschüttelt, ein Vorgang, der sich nicht günstig auf deren Lagerfähigkeit auswirkt. Auch ist eine gezielte Zuteilung der Futtermittelmenge für einzelne Tiere hierbei nicht möglich.

Aufgabe der Erfindung ist es daher, eine Einrichtung zur Versorgung von Tieren mit einem flüssigen Futtermittel zu schaffen, mittels der eine große Anzahl von Tieren mit stets exakt zu bemessenden Futtermittelmengen zu versorgen ist. Der dazu erforderliche Bauaufwand soll gering gehalten werden, dennoch soll eine hohe Betriebssicherheit bei einfacher Wartung und leichter Handhabung gewährleistet sein.

Gemäß der Erfindung wird dies bei einer Versorgungseinrichtung der vorgenannten Art dadurch erreicht, daß die Saugstelle oder ein Saugstellen speisendes Organ über eine elastisch verformbare Schlauchleitung mit einem ortsfesten Vorratsbehältnis, vorzugsweise einem Tränkeautomaten, verbunden und mit Hilfe eines Zugmittels gegenüber dem Vorratsbehältnis bzw. dem Tränkeautomaten horizontal verstellbar angeordnet ist.

Zweckmäßig ist es hierbei, die Saugstelle aus einem in einer Platte auswechselbar eingesetzten Saugnuckel zu bilden und die Platte seitlich verschiebbar in einer oberen Führungsschiene und/oder einer unteren Führungsschiene, die vorzugsweise jeweils U-förmig gestaltet sind, zu halten.

Nach einer andersartigen Ausgestaltung können die Saugstellen aber auch jeweils aus einem ortsfesten, vorzugsweise seitlich voneinander getrennt angeordneten Aufnahmebehältnis, beispielsweise einem abnehmbaren Eimer, bestehen,

./.

in die das Futtermittel wahlweise mittels eines in einer vertikal verschiebbar in einer oberen Führungsschiene und/oder einer unteren Führungsschiene gehaltenen Platte eingesetzten Einfüllstutzens oder dgl. als speisendes Organ, dem das Futtermittel gesteuert zuführbar ist, eingefüllt werden kann.

Zweckmäßig ist es bei jeder dieser Ausführungsformen, die Platte mittels in einem mit dieser verbundenen Gabelstück drehbar gelagerten Rolle auf der mit Gleitflächen versehenen oberen Führungsschiene verschiebbar zu lagern.

Zur Abstützung der Schlauchleitung ist es angebracht, eine parallel zu den Führungsschienen verlaufende flächige, vorzugsweise als Trog ausgebildete Auflage vorzusehen, die, um die von den Tieren zu erbringende Saugleistung gering zu halten, unterhalb des unteren Flüssigkeitsspiegels des Mixers des Tränkeautomaten bzw. des Vorratsbehälters angeordnet sein sollte.

Zweckmäßig ist es ferner, den Tränkeautomaten bzw. das Vorratsbehältnis etwa mittig zu den Führungsschienen anzuordnen, so daß die Saugstelle bzw. der Einfüllstutzen beidseitig zu diesem verfahren werden kann und die Schlauchleitung nur etwa die halbe Länge des Verstellweges aufweisen muß.

Als Zugmittel kann ein über Führungsrollen umlaufender Kettentrieb, ein Zugband, ein Zahnstangen- oder Reibradtrieb oder dgl. vorgesehen werden, das mittels eines vorzugsweise als Stellmotor ausgebildeten Antriebsmotors in beiden Verstellrichtungen antreibbar ist.

./.

Sehr vorteilhaft ist es ferner, die verfahrbare Saugstelle oder den verfahrbaren Einführstutzen vorzugsweise in einem der Endbereiche der Führungsschienen zur Selbstentleerung der Schlauchleitung unter das untere Flüssigkeitsniveau des Tränkeautomaten bzw. des Vorratsbehältnisses abzusenken und die Schlauchleitung vorzugsweise in abgesenkter Stellung der Saugstelle bzw. des Einfüllstutzens mit einem Reinigungsmittel, beispielsweise Wasser, durchzuspülen.

Des weiteren ist es zweckmäßig, an den Platten jeweils eine mit dem Programmschaltwerk des Tränkeautomaten verbundene Identifizierungseinheit anzubringen und zur gezielten Verstellung der Saugstelle bzw. des Einfüllstutzens an einer der Führungsschienen, vorzugsweise an der oberen Führungsschiene, eine oder mehrere Steuermarken und an der verfahrbaren Saugstelle bzw. dem Einfüllstutzen einen Annäherungsschalter vorzusehen. Auf diese Weise können nicht nur bestimmte Stellen in einem Stall, wie z. B. Stallboxen, um einzelne Tiere und/oder Gruppen von Tieren füttern zu können, leicht angefahren werden, sondern es kann auch eine gezielte für verschiedene Tiere unterschiedliche Zuteilung des Futtermittels, zumal die Tiere mit Hilfe der Identifizierungseinheit ohne weiteres zu erkennen sind, so daß die diesen jeweils zugeteilte Futtermittelmenge fallweise aufbereitet werden kann, vorgenommen werden.

Die gemäß der Erfindung ausgebildete Versorgungseinrichtung ist nicht nur sehr einfach in der konstruktiven Ausgestaltung und damit auf wirtschaftliche Weise herzustellen, sondern auch äußerst betriebssicher und ermöglicht vor allem eine gezielte Fütterung einer großen Anzahl von Tieren. Wird nämlich die Saugstelle bzw. ein Saugstellen speisendes

./.

- 5 -

Organ in Form eines Aufnahmebehältnissen zugeordneten Einfüllstutzens über eine elastisch verformbare Schlauchleitung mit einem ortsfesten Tränkeautomaten oder einem Vorratsbehältnis verbunden und gegenüber diesem horizontal verschiebbar angeordnet, so sind nur wenige Bauteile erforderlich, um die Saugstelle bzw. den Einfüllstutzen zu verändern. Auch bedingt dies nur eine geringe Antriebsleistung, da lediglich die in Schienen geführte Saugstelle bzw. der Einfüllstutzen sowie die Schlauchleitung zu verstellen sind. Auch können die oberhalb des Stallbodens angeordneten Führungsschienen nicht verschmutzen, der Aufwand zum Unterhalt der vorschlagsgemäß ausgebildeten Versorgungseinrichtung ist daher unerheblich.

Vor allem aber ist von Vorteil, daß mit Hilfe eines mit einem Programmschaltwerk ausgestatteten Tränkeautomaten den einzelnen Tieren eine diesen jeweils zugeteilte Futtermittelmenge ohne weiteres verabreicht werden kann. Dies kann in der Weise erfolgen, daß die Tiere einer Gruppe stets die gleiche Futtermittelmenge erhalten oder daß, bei Identifizierung des jeweils zu fütternden Tieres, dieses die vorbestimmte Futtermittelmenge absaugen kann. Eine gezielte, dem jeweiligen Alter entsprechende Fütterung von Jungtieren ist demnach leicht zu bewerkstelligen.

In der Zeichnung sind zwei Ausführungsbeispiele der gemäß der Erfindung ausgebildeten Versorgungseinrichtung dargestellt, die nachfolgend im einzelnen erläutert sind. Hierbei zeigen:

Fig. 1    die aus einem ortsfesten Tränkeautomaten und einer verfahrbaren Saugstelle bestehende Einrichtung in Vorderansicht,

./.

0150394

- 6 -

Fig. 2    die Versorgungseinrichtung nach Fig. 1
         in einer Seitenansicht, teilweise im Schnitt
         und

Fig. 3    eine aus ortsfesten Aufnahmebehältnissen
         und einem verfahrbaren diese speisende Organe
         gebildete Versorgungseinrichtung.

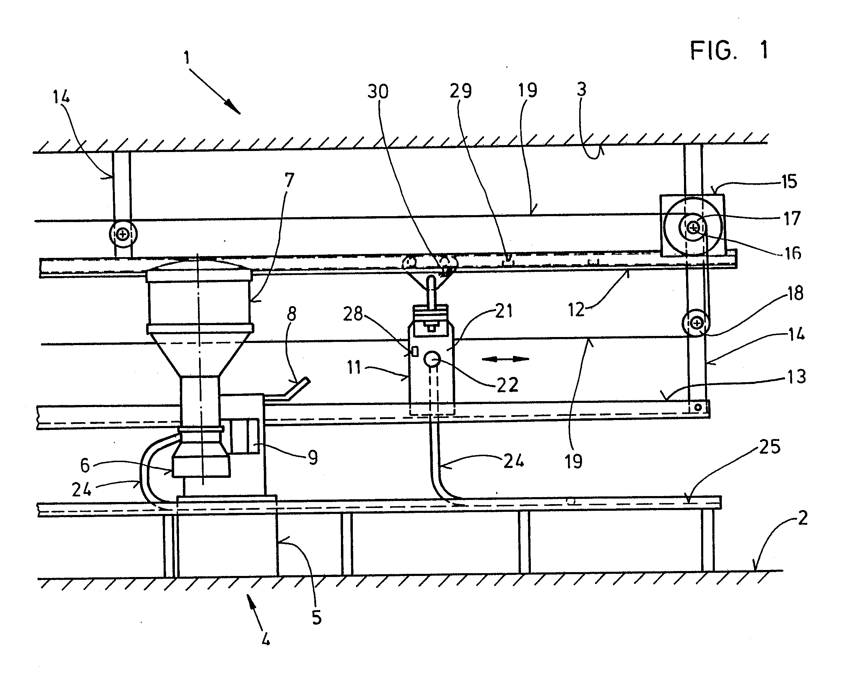

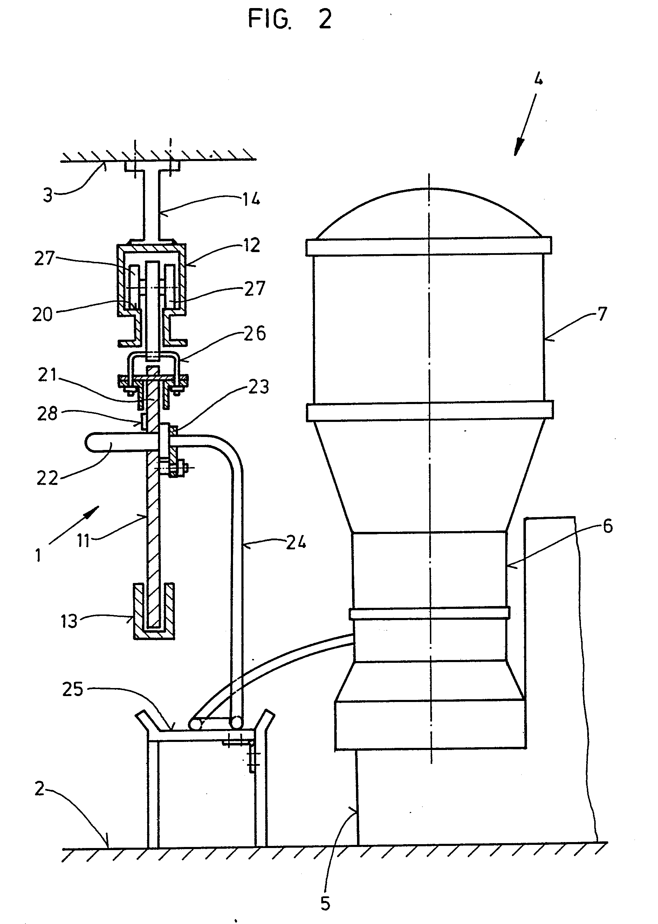

Die in den Fig. 1 und 2 dargestellte und mit 1 bezeichnete
Einrichtung dient zur gesteuerten Versorgung von einer
großen Anzahl von Tieren mit einem flüssigen Futtermittel
und besteht im wesentlichen aus einem ortsfesten Tränkeautomaten 4 und einer Saugstelle 11, die gegenüber diesem
seitlich verstellbar angeordnet ist. Das in einem Mixer 6,
der auf einem auf dem Stallboden 2 stehenden Gehäuse 5
gehalten ist, aus aus einem Vorratsbehältnis 7 zugeführten
Trockenpulver und Wasser, das über eine Leitung 8 zuströmt,
aufbereitete Futtermittel steht den Tieren an der Saugstelle 11 zur Verfügung.

Die verfahrbare Saugstelle 11 ist bei dem gezeigten Ausführungsbeispiel aus einer Platte 21 und einem in dieser
eingesetzten und mittels einer Klemmschelle 23 gehaltenen
Nuckel 22 gebildet, der über eine  elastisch verformbare
Schlauchleitung 24 an den Mixer 6 des Tränkeautomaten 4
angeschlossen ist. Die Platte 21 ist hierbei verschiebbar
in  einer oberen Führungsschiene 12 und einer unteren
Führungsschiene 13 gehalten, die mittels Streben 14 an der
Stalldecke 3 aufgehängt und U-förmig ausgebildet sind. Um
die zu überwindenden Reibungskräfte gering zu halten, ist
die Platte 21 über ein Gabelstück 26 und an diesem angebrachten Rollen 27 abgestützt, die sich an der oberen
Führungsschiene 12 vorgesehenen Gleitflächen 20 abwälzen.

- 7 -

Zum Antrieb der Saugstelle 11 dient ein umlaufendes Zugseil 19, das über Rollen 18 geführt ist und durch einen
Motor 15 angetrieben wird, auf dessen Abtriebswelle 16
eine Antriebsrolle 17 angeordnet ist. Wird der Motor 15
als Stellmotor ausgebildet und werden z. B. an der oberen
Führungsschiene 12 Steuermarken 29 angebracht, so kann
die mit einem Annäherungsschalter 3o ausgestattete
Saugstelle 11 schrittweise verfahren werden. Des weiteren
kann an der Platte 21 eine Identifizierungseinheit 28
vorgesehen werden, mittels der den einzelnen mit einer
Kennmarke ausgestatteten Tieren im Zusammenwirken mit
einem dem Tränkeautomaten 4 zugeordneten Programmschaltwerk 9 eine bestimmte Futtermittelmenge zugeteilt werden
kann.

Da der Tränkeautomat 4 etwa in der Mitte der Führungsschiene 12 und 13 angeordnet ist, muß die elastisch verformbare Schlauchleitung 24, die auf einer unterhalb des
unteren Flüssigkeitsniveaus des Mixers 6 angeordneten
trogförmig ausgebildeten Auflage 25 abgestützt ist, nur
etwa die halbe Länge der Führungsschienen 12, 13 aufweisen, um dennoch die Saugstelle 11 über deren gesamte
Länge verfahren zu können. Die Abkühlung des erwärmten
Futtermittels in der Schlauchleitung 24 ist somit unerheblich, auch müssen die Tiere, da das Futtermittel von
selbst in die Schlauchleitung 24 einströmt, nur eine geringe Saugleistung erbringen. Bei einfacher Handhabung
ermöglicht die Einrichtung 1 somit eine betriebssichere
gezielte Fütterung einer großen Anzahl von Tieren mit dem
in dem Tränkeautomaten 4 aufbereiteten flüssigen Futtermittel.

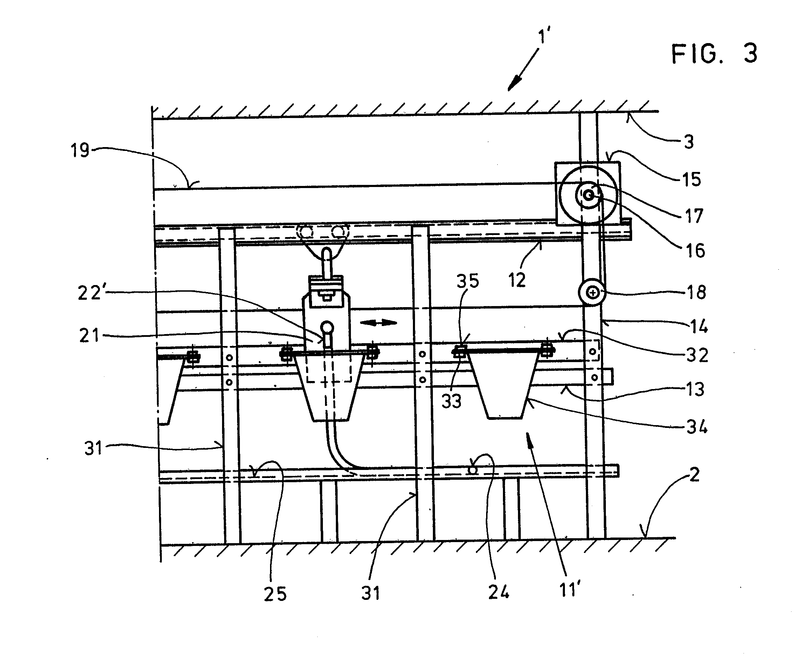

Bei der Versorgungseinrichtung 1' nach Fig. 3 sind die
Saugstellen 11' jeweils aus einem Aufnahmebehältnis in
Form eines Eimers 34 und einem verfahrbaren, diese

./.

- 8 -

speisenden Organ nach Art eines Einfüllstutzens 22'
gebildet. Über die Schlauchleitung 24 ist der Einfüllstutzen 22' mit einem nicht dargestellten, mittig zu
den Führungsschienen 12 und 13 angeordneten Vorratsbehältnis verbunden.

Die Eimer 34 sind, um diese leicht reinigen zu können,
abnehmbar gehalten. Dazu sind an den vertikal verlaufenden Streben 14 und 31, durch die somit Einzel- oder
Gruppenboxen geschaffen sind, Querstreben 32 befestigt,
die jeweils eine Halterung 33 tragen, an denen die Eimer
34 mittels Schrauben 35 arretiert sind. Durch die zu
fütternden Tiere können die Eimer 34 somit nicht heruntergeworfen werden.

Der die Eimer speisende Einfüllstutzen 22' ist wiederum
in einer verfahrbaren Platte 21 eingesetzt, die, wie bei
dem Ausführungsbeispiel nach Fig. 1, in den Führungsschienen 12 und 13 seitlich verschiebbar gehalten und
mittels des Motors 15 und das Zugseil 19 verstellbar ist.
In jedes der Aufnahmebehältnisse kann demnach, da das
Futtermittel dem Einfüllstutzen 22' gesteuert, und zwar
beispielsweise mit Hilfe eines Magnetventils oder einer
Förderpumpe, zugeführt wird, eine bestimmte einstellbare
Futtermittelmenge eingebracht werden, so daß auf diese
Weise eine gezielte Fütterung möglich ist.

5. Dezember 1984    e-1
A 2606 EP

**DIPL.-ING. GUIDO ENGELHARDT PATENTANWALT**

**7990 Friedrichshafen**

- 1 -

Martin Förster
7707 Engen

P a t e n t a n s p r ü c h e :

1. Einrichtung zum Versorgen von Kälbern, Rindern oder ähnlichen Haustieren, insbesondere Jungtieren, mit einem flüssigen Futtermittel, das einer Saugstelle zugeführt wird,

d a d u r c h   g e k e n n z e i c h n e t ,

daß die Saugstelle (11) oder ein Saugstellen speisendes Organ (22') über eine elastisch verformbare Schlauchleitung (24) mit einem ortsfesten Vorratsbehältnis, vorzugsweise einem Tränkeautomaten (4), verbunden und mit Hilfe eines Zugmittels (19) gegenüber dem Vorratsbehältnis bzw. dem Tränkeautomaten (4) horizontal verstellbar angeordnet ist.

2. Versorgungseinrichtung nach Anspruch 1,

d a d u r c h   g e k e n n z e i c h n e t ,

./.

daß die Saugstelle (11) aus einem in einer Platte (21) auswechselbar eingesetzten Saugnuckel (22) besteht und daß die Platte (21) vertikal verschiebbar in einer oberen Führungsschiene (12) und/oder einer unteren Führungsschiene (13), die vorzugsweise jeweils U-förmig ausgebildet sind, gehalten ist.

3. Versorgungseinrichtung nach Anspruch 1,

d a d u r c h   g e k e n n z e i c h n e t ,

daß die Saugstellen (11') jeweils aus einem ortsfesten, vorzugsweise seitlich voneinander getrennt angeordneten Aufnahmebehältnis (34), beispielsweise einem abnehmbaren Eimer, bestehen, in die das Futtermittel wahlweise mittels eines in einer vertikal verschiebbar in einer oberen Führungsschiene (12) und/oder einer unteren Führungsschiene (13) gehaltenen Platte (21) eingesetzten Einfüllstutzens (22') oder dgl. als speisendes Organ, dem das Futtermittel gesteuert zuführbar ist, einbringbar ist.

4. Versorgungseinrichtung nach einem oder mehreren der Ansprüche 1 bis 3,

d a d u r c h   g e k e n n z e i c h n e t ,

daß die Platte (21) mittels in einem mit dieser verbundenen Gabelstück (26) drehbar gelagerten Rollen (27) auf der mit Gleitflächen (20) versehenen oberen Führungsschiene (12) verschiebbar gelagert ist.

5. Versorgungseinrichtung nach einem oder mehreren der Ansprüche 1 bis 4,

d a d u r c h   g e k e n n z e i c h n e t ,

./.

- 3 -

daß zur Abstützung der Schlauchleitung (24) eine
parallel zu den Führungsschienen (12, 13) verlaufende
flächige, vorzugsweise als Trog ausgebildete Auflage
(25) vorgesehen ist.

6. Versorgungseinrichtung nach Anspruch 5,

d a d u r c h   g e k e n n z e i c h n e t ,

daß die Auflage (24) unterhalb des unteren Flüssigkeitsspiegels des Mixers (6) des Tränkeautomaten (4) bzw.
des Vorratsbehältnisses angeordnet ist.

7. Versorgungseinrichtung nach einem oder mehreren
der Ansprüche 1 bis 6,

d a d u r c h   g e k e n n z e i c h n e t ,

daß der Tränkeautomat (4) bzw. das Vorratsbehältnis
etwa mittig zu den Führungsschienen (12, 13) angeordnet
sind.

8. Versorgungseinrichtung nach einem oder mehreren
der Ansprüche 1 bis 7,

d a d u r c h   g e k e n n z e i c h n e t ,

daß als Zugmittel (19) ein über Führungsrollen (18)
umlaufender Kettentrieb, ein Zugband, ein Zahnstangen-
oder Reibradtrieb oder dgl. vorgesehen ist, das mittels
eines vorzugsweise als Stellmotor ausgebildeten Antriebsmotors (15) in beiden Verstellrichtungen antreibbar ist.

./.

- 4 -

9. Versorgungseinrichtung nach einem oder mehreren der Ansprüche 1 bis 8,

d a d u r c h   g e k e n n z e i c h n e t ,

daß die verfahrbare Saugstelle (11) oder der verfahrbare Einfüllstutzen (22') vorzugsweise in einem der Endbereiche der Führungsschienen (12, 13) zur Selbstentleerung der Schlauchleitung (24) unter das untere Flüssigkeitsniveau des Tränkeautomaten (4) bzw. des Vorratsbehältnisses absenkbar ist.

1o. Versorgungseinrichtung nach einem oder mehreren der Ansprüche 1 bis 9,

d a d u r c h   g e k e n n z e i c h n e t ,

daß die Schlauchleitung (24) vorzugsweise in abgesenkter Stellung der Saugstelle (11) bzw. des Einfüllstutzens (22') von einem Reinigungsmittel, beispielsweise Wasser, durchspülbar ist.

11. Versorgungseinrichtung nach einem oder mehreren der Ansprüche 1 bis 1o,

d a d u r c h   g e k e n n z e i c h n e t ,

daß an der Platte (21) eine mit dem Programmschaltwerk (9) des Tränkeautomaten (4) verbundene Identifizierungseinheit (28) angebracht ist.

12. Versorgungseinrichtung nach einem oder mehreren der Ansprüche 1 bis 9, 11

d a d u r c h   g e k e n n z e i c h n e t ,

./.

- 5 -

daß zur gezielten Verstellung der Saugstelle (11)
bzw. des Einfüllstutzens (22') an einer der Führungsschienen (12, 13), vorzugsweise an der oberen Führungsschiene (12), eine oder mehrere Steuermarken (29) und
an der verfahrbaren Saugstelle (11) bzw. dem Einfüllstutzen (22') ein Annäherungsschalter (3o) angebracht
sind.

5. Dezember 1984    e-1
A 2606 EP

0150394

DEZ. 84

A 2606EP

FIG. 1

FIG. 2

FIG. 3

0150394

Europäisches Patentamt

**EUROPÄISCHER RECHERCHENBERICHT**

Nummer der Anmeldung

EP 84 11 5429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 102 830 (J.M. BATAILLE) * Vollständiges Dokument * | 1,8 | A 01 K 9/00 |
| A | | 7 | |
| | --- | | |
| Y | DE-A-1 782 748 (F. HOWALDT) * Anspruch 1, Figur 1 * | 1,8 | |
| A | | 4 | |
| | --- | | |
| A | FR-A-2 420 919 (R.A. LAPIERRE) * Anspruch 1, Figuren * | 1 | |
| | --- | | |
| A | DE-U-8 113 422 (M. FÖRSTER) * Ansprüche, Figuren * | 1 | |
| | ----- | | RECHERCHIERTE SACHGEBIETE (Int. Cl.4) |
| | | | A 01 K 7/00 A 01 K 9/00 |

Der vorliegende Recherchenbericht wurde für alle Patentansprüche erstellt.

| Recherchenort | Abschlußdatum der Recherche | Prüfer |
|---|---|---|
| BERLIN | 25-03-1985 | WUNDERLICH J E |